# EUROPÄISCHE PATENTSCHRIFT

(11) **EP 1 641 872 B1**
(45) Veröffentlichungstag und Bekanntmachung des Hinweises auf die Patenterteilung: **14.02.2007**
(21) Anmeldenummer: 04740093.2
(22) Anmeldetag: 19.06.2004
(51) Int. Cl.: C08K 5/098, C08L 27/06

(54) **VERWENDUNG VON ZUSAMMENSETZUNGEN AUF BASIS VON ZINKSALZEN AROMATISCHER UND NICHTAROMATISCHER CARBONS UREN ZUR STABILISIERUNG VON HALOGENHALTIGEN ORGANISCHEN KUNSTSTOFFEN**
USE OF COMPOSITIONS BASED ON ZINC SALTS OF AROMATIC AND NON-AROMATIC CARBOXYLIC ACIDS FOR STABILISING ORGANIC PLASTICS CONTAINING HALOGEN
UTILISATION DE COMPOSITIONS A BASE DE SELS DE ZINC D'ACIDES CARBOXYLIQUES AROMATIQUES ET NON AROMATIQUES POUR LA STABILISATION DE PLASTIQUES ORGANIQUES HALOGENES

(30) Priorität: 30.06.2003 DE 10329350
(43) Veröffentlichungstag der Anmeldung: 05.04.2006
(73) Patentinhaber: Reagens Deutschland GmbH, 49393 Lohne (DE)
(72) Erfinder: DAUTE, Peter, 27616 Beverstedt (DE); PICARD, Ralf, 27572 Bremerhaven (DE)
(74) Vertreter: Weisgerber, Stefan
(86) Internationale Anmeldenummer: PCT/EP2004/006652
(87) Internationale Veröffentlichungsnummer: WO 2005/000952

(56) Entgegenhaltungen:
- WO-A-03/091324
- US-A- 4 134 868
- US-A- 5 302 315
- US-A- 5 656 202

## Beschreibung

### Gebiet der Erfindung

Die Erfindung betrifft die Verwendung von speziellen Zusammensetzungen enthaltend Zinksalze von (a) gesättigten oder ungesättigten, geradkettigen oder verzweigten Monocarbonsäuren mit 6 bis 36 C-Atomen und (b) aromatischen Carbonsäuren, ausgewählt aus der Gruppe Benzoesäure und der mit ein oder mehreren C₁₋₅-Alkylresten, Aminogruppen, Hydroxylgruppen oder weiteren Carboxylgruppen substituierten Benzoesäure, zur Stabilisierung von halogenhaltigen organischen Kunststoffen.

### Stand der Technik

Halogenhaltige Kunststoffe oder daraus hergestellte Formmassen neigen bekanntermaßen zu Abbau- beziehungsweise Zersetzungsreaktionen, wenn sie thermischer Belastung ausgesetzt sind oder mit energiereicher Strahlung, zum Beispiel Ultraviolettlicht, in Kontakt kommen.

Zur Stabilisierung von PVC werden im Zuge der Verarbeitung häufig metallhaltige Stabilisatoren (auf Basis von Pb, Ba, Pb/Ba/Cd, Sn, Ca/Zn) eingesetzt. Wichtige Komponenten zum Erhalt heller Anfangsfarben und einer guten Farbhaltung bei thermischer Belastung sind niedermolekulare Zinkseifen wie z.B. Zinkbenzoat. Dabei wird Zinkbenzoat als gemahlenes, sehr feinteiliges Pulver (Teilchengrößen um 0,001 mm) eingesetzt, da es einen sehr hohen Schmelzpunkt (oberhalb 250°C) besitzt und bei den Verarbeitungstemperaturen des PVC nicht aufschmilzt. Beim Einsatz grobkörnigen Zinkbenzoats kommt es nämlich einerseits zur Bildung von Stippen und Oberflächenfehlern an den PVC-Fertigerzeugnissen, andererseits tritt ein Wirkungsverlust im Hinblick auf die Stabilisatorwirkung ein., da Zinkbenzoat nicht homogen verteilt im PVC vorliegt.

### Beschreibung der Erfindung

**Aufgabe** der Erfindung war es, Zusammensetzungen zur Stabilisierung von halogenhaltigen organischen Kunststoffen, insbesondere PVC, gegen thermischen und/oder photochemischen Abbau auf Basis von Zinksalzen von aromatischen Carbonsäuren, insbesondere Zinkbenzoat, bereitzustellen, die sich homogen und ohne Wirkungsverlust in halogenhaltige organische Kunststoffe, insbesondere PVC, einarbeiten lassen, ohne dabei auf übliche feinkörnige, gemahlene Pulver von Zinksalzen von aromatischen Carbonsäuren zurückzugreifen.

Gegenstand der Erfindung ist die **Verwendung** von Zusammensetzungen enthaltend Zinksalze von
(a) ein oder mehreren gesättigten oder olefinisch ungesättigten, geradkettigen oder verzweigten Monocarbonsäuren mit 6 bis 36 C-Atomen und
(b) ein oder mehreren aromatischen Carbonsäuren, ausgewählt aus der Gruppe Benzoesäure und der mit ein oder mehreren C₁₋₅-Alkylresten, Aminogruppen, Hydroxylgruppen oder weiteren Carboxylgruppen substituierten Benzoesäure, die erhältlich sind, indem man
   - Zinksalze von aromatischen Carbonsäuren (b) mit einer Teilchengröße oberhalb von 0,1 mm, in eine vorgelegte Schmelze von Zinksalzen von (nichtaromatischen) Monocarbonsäuren (a) einrührt, oder
   - Zinksalze von aromatischen Carbonsäuren (b) mit einer Teilchengröße oberhalb von 0,1 mm, in eine vorgelegte Schmelze von (nichtaromatischen) Monocarbonsäuren (a) einrührt, oder
   - aromatische Carbonsäuren (b) in eine vorgelegte Schmelze von Zinksalzen von (nichtaromatischen) Monocarbonsäuren (a) einrührt und anschließend die aromatischen Carbonsäuren (b) in deren Zinksalze überführt, indem man Zinkoxid, Zinkhydroxid oder Zinkcarbonat zugibt und unter Rühren erhitzt, wobei die flüchtigen Nebenprodukte Wasser oder Kohlendioxid entweichen, oder
   - aromatische Carbonsäuren (b) in eine vorgelegte Schmelze von (nichtaromatischen) Monocarbonsäuren (a) einrührt und anschließend sowohl die Monocarbonsäuren (a) als auch die aromatischen Carbonsäuren (b) in deren Zinksalze überführt, indem man Zinkoxid, Zinkhydroxid oder Zinkcarbonat zugibt und unter Rühren erhitzt, wobei die flüchtigen Nebenprodukte Wasser oder Kohlendioxid entweichen;
   zur Stabilisierung von halogenhaltigen organischen Kunststoffen gegen thermischen und/oder photochemischen Abbau.

Der wesentliche Vorteil der Erfindung besteht darin, daß beim Einsatz von Zinksalzen von aromatischen Carbonsäuren wie Zinkbenzoat auf die üblichen feinteiligen, gemahlenen Pulver verzichtet werden kann. Dies ist besonders ökonomisch, weil im Zuge der Herstellung der erfindungsgemäß einzusetzenden Zusammensetzungen entweder direkt auf grobkörnige, ungemahlene Anbietungsformen zurückgegriffen werden kann oder indem diese in situ erzeugt werden, wobei beim in situ Prozeß auch auch auf spezielle Reinigungsschritte verzichtet wird. Die Zinksalze von aromatischen Carbonsäuren (b) liegen in den erfindungsgemäß einzusetzenden Zusammensetzungen in den Zinksalzen von (nichtaromatischen) Carbonsäuren (a) in gelöster Form vor, wodurch sichergestellt ist, daß sie sich höchst effektiv in halogenhaltige Kunststoffe wie PVC einarbeiten lassen und dabei bezüglich ihrer Stabilisatoreigenschaften bzgl. thermischem und/oder photochemischem Abbau keine Wirkungseinbußen erleiden.

### Monocarbonsäuren (a)

Beispielhaft für die im Sinne der vorliegenden Erfindung in Frage kommenden gesättigten, geradkettigen Monocarbonsäuren (a) seien nachstehend die folgen genannt: Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure, Octadecansäure (Stearinsäure), Nonadecansäure, Eicosansäure (Arachinsäure), Heneicosansäure, Docosansäure (Behensäure), Tricosansäure, Tetracosansäure (Lignocerinsäure), Pentacosansäure, Hexacosansäure (Cerotinsäure), Octacosansäure, Triacontansäure (Melissinsäure) sowie Montansäuren. In gleicher Weise kommen auch die entsprechenden olefinisch ungesättigten sowie die entsprechenden verzweigten Monocarbonsäuren in Frage.

### Aromatischen Carbonsäuren (b)

Bevorzugt ist Benzoesäure. Bezüglich der substituierten Benzoesäuren (b) seien hier beispielhaft p-tert.-Butyl-benzoesäure, 2-Aminobenzoesäure, 3-Aminobenzoesäure, 4-Aminobenzoesäure, Salicylsäure, Phthalsäure, 3-Amino-2-methylbenzoesäure, Gallussäure, sowie o-, m-, und p-Toluylsäure genannt.

### Zu den Zusammensetzungen

Die **erfindungsgemäß einzusetzenden** Zusammensetzungen sind auf unterschiedliche Weisen zugänglich:

In einer ersten Variante trägt man die grobkörnigen Zinksalze von aromatischen Carbonsäuren (b) in eine vorgelegte Schmelze von Zinksalzen von (nichtaromatischen) Monocarbonsäuren (a) ein.

In einer zweiten Variante trägt man die grobkörnigen Zinksalze von aromatischen Carbonsäuren (b) in eine vorgelegte Schmelze von (nichtaromatischen) Monocarbonsäuren (a) ein.

In einer dritten Variante trägt man die aromatischen Carbonsäuren (b) in eine vorgelegte Schmelze von Zinksalzen von (nichtaromatischen) Monocarbonsäuren (a) ein und überführt anschließend die aromatischen Carbonsäuren (b) in deren Zinksalze, indem man Zinkoxid, Zinkhydroxid oder Zinkcarbonat zugibt und unter Rühren erhitzt, wobei die flüchtigen Nebenprodukte Wasser oder Kohlendioxid entweichen.

In einer vierten Variante trägt man die aromatischen Carbonsäuren (b) in eine vorgelegte Schmelze von (nichtaromatischen) Monocarbonsäuren (a) ein und überführt anschließend sowohl die Monocarbonsäuren (a) als auch die aromatischen Carbonsäuren (b) in deren Zinksalze, indem man Zinkoxid, Zinkhydroxid oder Zinkcarbonat zugibt und unter Rühren erhitzt, wobei die flüchtigen Nebenprodukte Wasser oder Kohlendioxid entweichen. Diese Methode ist aus **US-A-5,302,315** bekannt. Ausdrücklich sei jedoch darauf hingewiesen, daß die US-A-5,302,315 lediglich die Verwendung der so hergestellten Produkte als Vulkanisationsaktivator für Kautschuk offenbart.

Die **erfindungsgemäß einzusetzenden** Zusammensetzungen enthalten wie oben ausgeführt Zinksalze von
(a) ein oder mehreren gesättigten oder olefinisch ungesättigten, geradkettigen oder verzweigten Monocarbonsäuren mit 6 bis 36 C-Atomen und
(b) ein oder mehreren aromatischen Carbonsäuren, ausgewählt aus der Gruppe Benzoesäure und der mit ein oder mehreren C₁₋₅-Alkylresten, Aminogruppen, Hydroxylgruppen oder weiteren Carboxylgruppen substituierten Benzoesäure.

Die erstgenannten Zinksalze werden nachfolgend als Zinksalze (I) bezeichnet, die zweitgenannten als Zinksalze (II).

Bei den Zinksalzen (I) sind Zinklaurat und Zinkstearat bevorzugt.

Bei den Zinksalzen (II) ist Zinkbenzoat bevorzugt.
Die Zinksalze (II) liegen in den erfindungsgemäß einzusetzenden Zusammensetzungen vorzugsweise in einer Menge von 1 bis 50 Gew.-% - bezogen auf die gesamte Zusammensetzung - vor.

Bei der Stabilisierung von halogenhaltigen organischen Kunststoffen werden die erfindungsgemäß einzusetzenden Zusammensetzungen in einer Menge von 0,001 bis 5 phr, vorzugsweise 0,01 bis 2 phr und insbesondere 0,01 bis 0,5 phr eingesetzt. Der dem Fachmann geläufige Ausdruck phr ("parts per hundred resin") gibt bekanntlich an, wieviele Gewichtsteile der Komponente im Kunststoff - bezogen auf 100 Gewichtsteile Kunststoff- vorhanden sind.

Die erfindungsgemäß einzusetzenden Zusammensetzungen können auf übliche Weise konfektioniert werden, etwa durch Sprühkristallisation, Pastillieren, Schuppen oder Vertropfen. Die Korngröße der konfelktionierten Zusammensetzungen ist für den Einsatz zur PVC-Stabilisierung an sich nicht kritisch, wird jedoch vorzugsweise unterhalb von 10 mm eingestellt.

In einer Ausführungsform enthalten die erfindungsgemäß einzusetzenden Zusammensetzungen weiterhin ein oder mehrere Kunststoff-Additive, die ausgewählt sind aus der Gruppe der folgenden Verbindungen: Cyanacetylharnstoffe, Dimethylaminouracil, Antistatika, Zeolithe, kationischen Schichtverbindungen, CHAP-Verbindungen, Katoite, Glycidyl-Verbindungen, beta-Diketone und deren Salze wie Calciumacetylacetonat, beta-Ketoester, Dihydropyridine und Polydihydropyridine, Polyole und Polyolderivate, sterisch gehinderte Amine (Tetraalkylpiperidinverbindungen), Alkalialumocarbonate (Dawsonite), Alkali- und Erdalkaliverbindungen, Antioxidantien, Trenn - und/oder Gleitmittel, Weichmacher, Pigmente, Füllstoffe, Phosphite, Thiophosphite und Thiophosphate, Mercaptocarbonsäureester, Epoxidierte Fettsäureester, UV-Absorber und Lichtschutzmittel, Treibmittel, Harnstoff, Metallseifen, Perchlorate, Trifluormethansulfonate. Die genannten Kunststoff-Additive sind dem Fachmann bekannt und vielfach in der Literatur beschrieben. Beispielhaft sei diesbezüglich auf die **WO-A-03/004558** der Anmelderin verwiesen. Bei den Metallseifen sind die Zinkseifen ausgenommen.

### Zu den halogenhaltigen organischen Kunststoffen

Bei den halogenhaltigen organischen Kunststoffen, die es mit den erfindungsgemäß einzusetzenden Zusammensetzungen zu stabilisieren gilt, handelt es sich insbesondere um chlorhaltige Polymere oder deren Recyclate. Beispiele für solche zu stabilisierenden chlorhaltigen Polymere oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen auch Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

### Beispiele

### Zu den eingesetzten Substanzen

| | |
|---|---|
| Vinnolit H 68DS | PVC (Fa. Vinnolit Kunststoffe) |
| Hydrocarb 95 T | Kreide (Fa. Omya) |
| Paraloid KM 355 | Butylacrylat-Methylmethacrylat-Copolymer (Fa. Rohm & Haas) |
| Paraloid K 125 | Acylat-Methacrylat-Copolymer (Fa. Rohm&Haas) |
| Kronos 2200 | Titandioxid (Fa. Kronos) |
| Stabilox CZ 3353 | Stabilisatonnischung auf Basis Ca/Zn (Fa. Cognis) |
| Loxiol 2735 | Gleitmittel (Fa. Cognis) |
| Zinkstearat | (Fa. Faci S.p.A) |
| Zinklaurat | (Fa. Greven) |
| Zinkbenzoat | Teilchengröße: 100% < 0.1mm (Fa. Greven) |
| Benzoesäure | (Fa. Fluka) |

### Beispiel 1 (B1)

### (erfindungsgemäß einzusetzende Zusammensetzung)

Aus 88.2 g Zinkoxid, 79.4 g Benzoesäure, 172.6 g Laurinsäure (94% C12) und 179.0 g technischer Stearinsäure (C16/C18) wurde bei 120-130°C wie folgt ein Gemisch von Zinkseifen hergestellt. Die technische Stearinsäure und die Laurinsäure wurden bei 100°C aufgeschmolzen und dann mit der Benzoesäure versetzt. Die blanke, hell gelbe Schmelze wurde auf 120°C erhitzt und innerhalb von 10 Min. mit dem Zinkoxid versetzt. Unter Rühren wurde 1.5 h auf 130-135°C erhitzt, wobei Reaktionswasser entwich. Die Schmelze wurde zum Erstarren in eine Wanne gegossen.
Charakterisierung des Produktes: Schmelzpunkt 100°C, Zn-Gehalt (RFA) 14.1%

Das Produktgemisch hatte folgende Zusammensetzung: 20% Zinkbenzoat, 40% Zinklaurat und 40% Zinkstearat

### Beispiel 2 (B2)

### (erfindungsgemäß einzusetzende Zusammensetzung)

Aus 25.0 g Zinkoxid, 37.5 g Benzoesäure, 83.0 g technischer Stearinsäure (C16/C18) und 60 g Loxiol 2735 wurde bei 120-130°C wie folgt ein Zinkseifen-haltiges Gemisch hergestellt: Die technische Stearinsäure und das Loxiol 2735 wurden bei 100°C aufgeschmolzen und dann mit der Benzoesäure versetzt. Die blanke, hellgelbe Schmelze wurde auf 120°C erhitzt und innerhalb von 10 Min. mit dem Zinkoxid versetzt. Unter Rühren wurde 1.5 h auf 130-135°C erhitzt, wobei Reaktionswasser entwich. Die Schmelze wurde zum Erstarren in eine Wanne gegossen.
Charakterisierung des Produktes: Schmelzpunkt 108°C, Zn-Gehalt (RFA) 10.0%

Das Produktgemisch hatte folgende Zusammensetzung: 24% Zinkbenzoat, 46% Zinkstearat und 30% Loxiol 2735

### Anwendungsbeispiele

### (Beispiele B3 bis B5)

In der untenstehenden Tabelle 1 wurden die einzelnen Rezepturbestandteile der untersuchten Prüfrezepturen angegeben, in Tabelle 2 und 3 die ermittelten Prüfergebnisse dargestellt. In der ersten Zeile der Tabellen sind die jeweiligen Nummern der Beispiele angegeben.
Die Mengenanteile der einzelnen Komponenten sind in Tabelle 1 in phr angegeben; phr bedeutet dabei "part per hundred resin" und gibt an, wieviele Gewichtsteile der jeweiligen Komponente nach der Zugabe der Zusammensetzung im PVC - bezogen auf 100 Gewichtsteile PVC - vorhanden sind. Dementsprechend enthalten die Rezepturen jeweils 100 Teile PVC.

Die Beispiele 4 und 5 (B4 und B5) sind erfindungsgemäß. Beispiele 3 dient dem Vergleich.

**Tabelle 1 : Prüfrezepturen**

| | **B3** | **B4** | **B5** |
|---|---|---|---|
| Vinnolit H 68 DS | 100 | 100 | 100 |
| Hydrocarb 95 T | 5 | 5 | 5 |
| Paraloid KM 355 | 7 | 7 | 7 |
| Kronos 2200 | . 3 | 3 | 3 |
| Paraloid K 125 | 0.8 | 0.8 | 0.8 |
| Stabilox CZ 3353 | 2.3 | 2.3 | 2.3 |
| Zinkbenzoat | 0.05 | | |
| Loxiol 2735 | 0.6 | 0.6 | . 0.536 |
| Zinkstearat | 0.3 | 0.2 | 0.202 |
| Zinklaurat | 0.3 | 0.2 | 0.3 |
| Zusammensetzung gemäß B1 | - | 0.25 | - |
| Verb. Beispiel 2 | - | - | 0.212 |

Mit den Prüfrezepturen wurde wie folgt verfahren:

Aus dein PVC-Pulver und den Additiven wurde in einem Mischer der Fa. Thyssen-Henschel ein Dry-Blend hergestellt (Materialmenge = ca. 25 kg, Heiztemperatur = 120°C, anschließendes Abkühlen). Das Dry-Blend wurde auf einem Doppelschneckenextruder der Fa. Reifenhäuser zu einem Profil extrudiert (Parameter der Extrusion: Drehzahl 19.6 UpM; Maschinenbelastung 66%, Temperatur 180°C) Von den so extrudierten Profilen wurde die Reservestabilität (Ofenstabilität) bei 180°C nach DIN 58331 Teil 2 bestimmt, dabei wurden alle 15 Min. Probeplättchen aus dem Ofen genommen und die Farbe nach der L*,a*,b*-Methode (Gelbwerte b*, vergl. Tabelle unten) bestimmt. Darüber hinaus wurde die Thermostabilität nach DIN53381 bestimmt.

### Bestimmung der Reservestabilität nach DIN 58331 Teil 2:

Die Profile wurden gemäß der dem Fachmann bekannten L*,a*,b*-Methode (vergleiche DIN 5033) charakterisiert. Der b*-Wert gibt dabei die Lage auf der Blau/Gelb-Achse an. Üblicherweise wird der b*-Wert auch Gelbwert genannt und ist ein Maß für den Abbau des PVCs. Bei den Messungen kam ein handelsübliches Gerät mit der Bezeichnung "Micro Color" (Firma Dr. Lange) zum Einsatz. Hierzu wurden die Prüfsubstanz-haltigen Probeplättchen bei 180 °C in einem Thermoofen getempert, wobei die Probeplättchen im Abstand von 15 Minuten aus dem Ofen herausgenommen und die Farbe gemessen wurde. Die Prüfergebnisse sind in der Tabelle 2 zusammengestellt.

**Tabelle 2: Gelbwert (b*) gemäß DIN 53381 Teil 2**

| | **B3** | **B4** | **B5** |
|---|---|---|---|
| Lagerzeit bei 180°C im Ofen | | | |
| 0 Minuten | 4.3 | 4.3 | 4.2 |
| 15 Minuten | 6.7 | 6.4 | 6.2 |
| 30 Minuten | 7.4 | 7.1 | 7.0 |
| 45 Minuten | 8.2 | 8.0 | 8.2 |

### Bestimmung der Thermostabilität nach DIN 53381:

Die Thermostabilität wurde nach der DHC-Methode (Dehydrochlorierung) bestimmt. Dabei wird eine Probe bei 200°C im Stickstoffstrom erhitzt und die Zeit bestimmt wenn Salzsäuregas entweicht (Leitfähigkeits-Meßmethode). Die Methode ist dem Fachmann bekannt und in der DIN 53381 beschrieben. Die Prüfergebnisse sind in der Tabelle 3 zusammengestellt.

**Tabelle 3: Thermostabilität nach der DHC-Methode bei 200°C**

| Beispiel | Stabilität [Min] |
|---|---|
| **B3** | 32.1 |
| **B4** | 32.7 |
| **B5** | 32.1 |

Die Reserve- und die Thermostabilität waren bei allen Prüfmustern vergleichbar.

## Patentansprüche

1. Verwendung von Zusammensetzungen enthaltend Zinksalze von
(a) ein oder mehreren gesättigten oder olefinisch ungesättigten, geradkettigen oder verzweigten Monocarbonsäuren mit 6 bis 36 C-Atomen und
(b) ein oder mehreren aromatischen Carbonsäuren, ausgewählt aus der Gruppe Benzoesäure und der mit ein oder mehreren C₁₋₅-Alkylresten, Aminogruppen, Hydroxylgruppen oder weiteren Carboxylgruppen substituierten Benzoesäure,
die erhältlich sind, indem man
• Zinksalze von aromatischen Carbonsäuren (b) mit einer Teilchengröße oberhalb von 0,1 mm, in eine vorgelegte Schmelze von Zinksalzen von (nichtaromatischen) Monocarbonsäuren (a) einrührt, oder
• Zinksalze von aromatischen Carbonsäuren (b) mit einer Teilchengröße oberhalb von 0,1 mm, in eine vorgelegte Schmelze von (nichtaromatischen) Monocarbonsäuren (a) einrührt, oder
• aromatische Carbonsäuren (b) in eine vorgelegte Schmelze von Zinksalzen von (nichtaromatischen) Monocarbonsäuren (a) einrührt und anschließend die aromatischen Carbonsäuren (b) in deren Zinksalze überführt, indem man Zinkoxid, Zinkhydroxid oder Zinkcarbonat zugibt und unter Rühren erhitzt, wobei die flüchtigen Nebenprodukte Wasser oder Kohlendioxid entweichen, oder
• aromatische Carbonsäuren (b) in eine vorgelegte Schmelze von (nichtaromatischen) Monocarbonsäuren (a) einrührt und anschließend sowohl die Monocarbonsäuren (a) als auch die aromatischen Carbonsäuren (b) in deren Zinksalze überführt, indem man Zinkoxid, Zinkhydroxid oder Zinkcarbonat zugibt und unter Rühren erhitzt, wobei die flüchtigen Nebenprodukte Wasser oder Kohlendioxid entweichen, zur Stabilisierung von halogenhaltigen organischen Kunststoffen gegen thermischen und/oder photochemischen Abbau.

2. Verwendung nach Anspruch 1, wobei die Zusammensetzungen zusätzlich ein oder mehrere Kunststoff-Additive enthalten, die ausgewählt sind aus der Gruppe der folgenden Verbindungen: Cyanacetylharnstoffe, Dimethylaminouracil, Antistatika, Zeolithe, kationischen Schichtverbindungen, CHAP-Verbindungen, Katoite, Glycidyl-Verbindungen, beta-Diketone und deren Salze wie Calciumacetylacetonat, beta-Ketoester, Dihydropyridine und Polydihydropyridine, Polyole und Polyolderivate, sterisch gehinderte Amine (Tetraalkylpiperidinverbindungen), Alkalialumocarbonate (Dawsonite), Alkali- und Erdalkaliverbindungen, Antioxidantien, Trenn - und/oder Gleitmittel, Weichmacher, Pigmente, Füllstoffe, Phosphite, Thiophosphite und Thiophosphate, Mercaptocarbonsäureester, Epoxidierte Fettsäureester, UV-Absorber und Lichtschutzmittel, Treibmittel, Harnstoff, Metallseifen mit Ausnahme von Zinkseifen, Perchlorate, Trifluormethansulfonate.

## Claims

1. Use of compositions containing zinc salts of
(a) one or more saturated or olefinically unsaturated, straight-chain or branched monocarboxylic acids having 6 to 36 carbon atoms and
(b) one or more aromatic carboxylic acids selected from the group consisting of benzoic acid and of benzoic acid substituted by one or more C₁₋₅-alkyl radicals, amino groups, hydroxyl groups or other carboxyl groups,
which can be obtained by
• stirring zinc salts of aromatic carboxylic acids (b) having a particle size above 0.1 mm into a provided melt of zinc salts of (non-aromatic) monocarboxylic acids (a), or
• stirring zinc salts of aromatic carboxylic acids (b) having a particle size above 0.1 mm into a provided melt of (non-aromatic) monocarboxylic acids (a), or
• stirring aromatic carboxylic acids (b) into a provided melt of zinc salts of (non-aromatic) monocarboxylic acids (a) and subsequently converting the aromatic carboxylic acids (b) into their zinc salts by adding zinc oxide, zinc hydroxide or zinc carbonate and heating with stirring, wherein the volatile by-products water or carbon dioxide are discharged, or
• stirring aromatic carboxylic acids (b) into a provided melt of (non-aromatic) monocarboxylic acids (a) and subsequently converting both the monocarboxylic acids (a) and the aromatic carboxylic acids (b) into their zinc salts by adding zinc oxide, zinc hydroxide or zinc carbonate and heating with stirring, wherein the volatile by-products water or carbon dioxide are discharged,
in order to stabilise organic plastics containing halogen against thermal and/or photochemical decomposition.

2. Use according to Claim 1, wherein the compositions additionally contain one or more plastics additives selected from the group consisting of the following compounds: cyanacetyl ureas, dimethylaminouracil, anti-static agents, zeolites, cationic layer compounds, CHAP compounds, katoites, glycidyl compounds, beta-diketones and their salts such as calcium acetylacetonate, beta-ketoesters, dihydropyridines and polydihydropyridines, polyols and polyol derivates, sterically hindered amines (tetraalkylpiperidine compounds), alkalialumocarbonates (Dawsonite), alkali and earth alkali compounds, antioxidants, separating agents and/or lubricants, softeners, pigments, fillers, phosphites, thiophosphites and thiophosphates, mercaptocarboxylic acid esters, epoxidized fatty acid esters, UV absorbers and screening agents, blowing agents, urea, metal soaps with the exception of zinc soaps, perchlorates and trifluoromethane sulphonates.

## Revendications

1. Utilisation de compositions contenant des sels de zinc de
(a) un ou plusieurs acides monocarboxyliques, saturés ou oléfiniques insaturés, à chaîne linéaire ou ramifiés avec 6 à 36 atomes de carbone et
(b) un ou plusieurs acides carboxyliques aromatiques choisis dans le groupe des acides benzoïques et parmi les acides benzoïques substitués par un ou plusieurs radicaux alkyles en C₁-C₅, des groupes amino, des groupes hydroxyles ou des groupes carboxyles supplémentaires,
lesquels sont obtenus
- en mélangeant les sels de zinc des acides carboxyliques aromatiques (b), ayant une taille de particule supérieure à 0,1 mm, en une fusion prédéfinie de sels de zinc des acides monocarboxyliques (non aromatiques) (a), ou
- en mélangeant les sels de zinc des acides carboxyliques aromatiques (b), ayant une taille de particule supérieure à 0,1 mm, en une fusion prédéfinie des acides monocarboxyliques (non aromatiques) (a), ou
- en mélangeant les acides carboxyliques aromatiques (b) en une fusion prédéfinie de sels de zinc des acides monocarboxyliques (non aromatiques) (a) et ensuite en transformant les acides carboxyliques aromatiques (b) en leurs sels de zinc en ajoutant de l'oxyde de zinc, de l'hydroxyde de zinc ou du carbonate de zinc et en chauffant le tout en agitant, sachant que les sous-produits volatils, l'eau ou le dioxyde de carbone, se dégagent, ou
- en mélangeant les acides carboxyliques aromatiques (b) en une fusion prédéfinie des acides monocarboxyliques (non aromatiques) (a) et ensuite en transformant non seulement les acides monocarboxyliques (a) mais aussi les acides carboxyliques aromatiques (b) en leurs sels de zinc en ajoutant de l'oxyde de zinc, de l'hydroxyde de zinc ou du carbonate de zinc et en chauffant tout en agitant, sachant que les sous-produits volatils, l'eau ou le dioxyde de carbone, se dégagent,
pour la stabilisation de matières plastiques organiques halogénées contre la dégradation thermique et/ou photochimique.

2. Utilisation selon la revendication 1, dans laquelle les compositions contiennent en plus un ou plusieurs additifs pour matière plastique, lesquels sont choisis dans le groupe comprenant les composés suivants : la cyanoacétyl-urée, le diméthylamino-uracile, les antistatiques, la zéolithe, les composés lamellaires cationiques, les composés CHAP, la katoite, les composés glycidyliques, la β-dicétone et leurs sels tels que l'acétylacétonate de calcium, les β-cétoesters, la dihydropyridine et la polydihydropyridine, les polyols et les dérivés de polyol, les amines à encombrement stérique (composés de tétraalkylpipéridine), les aluminocarbonates alcalins (Dawsonite), les composés alcalins et alcalinoterreux, les antioxydants, les agents de démoulage et/ou les agents lubrifiants, les plastifiants, les pigments, les charges, les phosphites, les thiophosphites et les thiophosphates, les esters d'acides mercaptocarboxyliques, les esters d'acides gras époxydés, les stabilisants anti-UV et les agents photostabilisants, les agents d'expansion, l'urée, les savons métalliques à l'exception des savons du zinc, les perchlorates, et les trifluorométhanesulfonates.
